# EUROPÄISCHE PATENTSCHRIFT

(11) **EP 2 395 214 B1**
(45) Veröffentlichungstag und Bekanntmachung des Hinweises auf die Patenterteilung: **13.03.2013**
(21) Anmeldenummer: 11167513.8
(22) Anmeldetag: 25.05.2011
(51) Int. Cl.: F02C 7/24, F01D 25/30, F01D 9/04

(54) **Abgasgehäuse für eine Gasturbine sowie Verfahren zum Herstellen eines solchen Abgasgehäuses**
Exhaust Housing for a gas turbine and method for producing the same
Collecteur de gaz d'échappement pour turbomachine et procédé de production dudit collecteur

(30) Priorität: 10.06.2010 CH 9222010
(43) Veröffentlichungstag der Anmeldung: 14.12.2011
(73) Patentinhaber: Alstom Technology Ltd, 5400 Baden (CH)
(72) Erfinder: Brühwiler, Eduard, 5300, Turgi (CH)

(56) Entgegenhaltungen:
- WO-A1-03/020469
- WO-A1-2004/016911
- WO-A1-2009/157817
- DE-A1-102009 044 103
- FR-A- 1 234 975
- US-A1- 2003 185 673
- US-A1- 2005 022 501
- US-A1- 2007 234 706

## Beschreibung

### TECHNISCHES GEBIET

Die vorliegende Erfindung bezieht sich auf das Gebiet der Gasturbinen. Sie betrifft ein Abgasgehäuse für eine Gasturbine gemäss dem Oberbegriff des Anspruchs 1. Sie betrifft weiterhin ein Verfahren, gemäß Anspruch 9, zum Herstellen eines solchen Abgasgehäuses.

### STAND DER TECHNIK

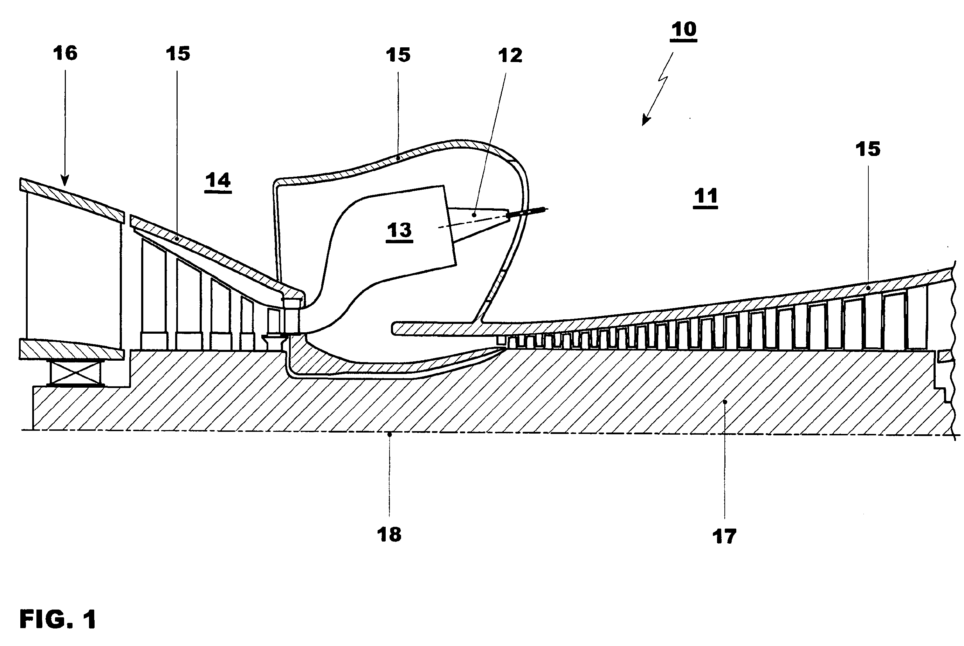

In Figur 1 ist in teilweise geschnittener Darstellung eine beispielhafte Gasturbine 10 wiedergegeben. Die Gasturbine 10 aus Figur 1 umfasst einen um eine Maschinenachse 18 drehbar gelagerten Rotor mit einer Rotorwelle 17 und einer Beschaufelung, die einerseits zu einem Verdichter 11 für die angesaugte Verbrennungsluft und andererseits zu einer Turbine 14 für die Entspannung des erzeugten Heissgases gehört. Zwischen Verdichter 11 und Turbine 14 ist eine Brennkammer 13 angeordnet, in die eine ringförmige Anordnung von Brennern 12 zur Verbrennung ein Brennstoff-Luft-Gemisch eindüst. Die Brennkammer 13 und die anschliessende Turbine 14 sind von einem Aussengehäuse 15 umgeben, an das ein ringförmiges Abgasgehäuse 16 angeflanscht ist.

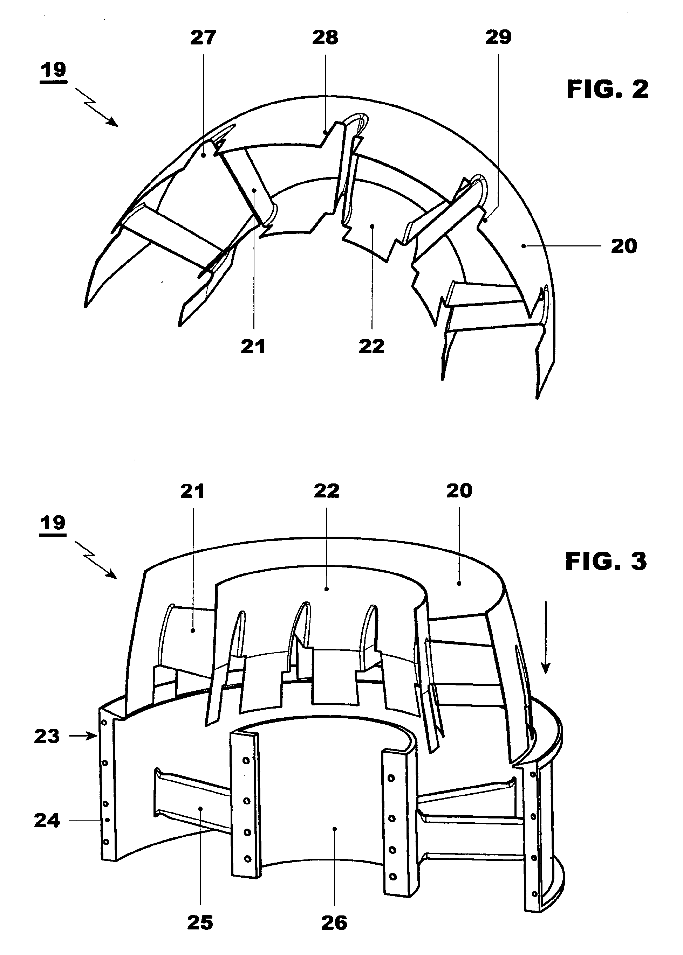

Das Abgasgehäuse 16 besteht zur Hauptsache aus einer Tragstruktur (23 in Figur 3) und einem Strömungsliner (19 in Figur 2-4; in den Figuren 2 und 3 ist jeweils nur eine Hälfte des vollständigen Strömungsliners dargestellt), der die austretenden Abgase aus der Turbine 14 in einem Ringkanal so führen muss, dass möglichst keine Strömungsverluste entstehen. Dabei ist der Strömungsliner 19 aerodynamisch gesehen ein Teil des Abgasdiffusors, der die hohe Strömungsgeschwindigkeit des Abgases in Druck umwandelt.

Wie in Figur 2 zu erkennen ist, besteht der Strömungsliner 19 aus einem ringförmigen Innenliner 22, radialen Linerrippen 21 und einem ringförmigen Aussenliner 20, welche in den meisten Anwendungen eine Einheit bilden, d.h. verschweißt sind. Selbstverständlich sind die Hälften des Strömungsliners 19 (Ober- und Unterteil) in einer Trennebene aus Servicegründen trennbar.

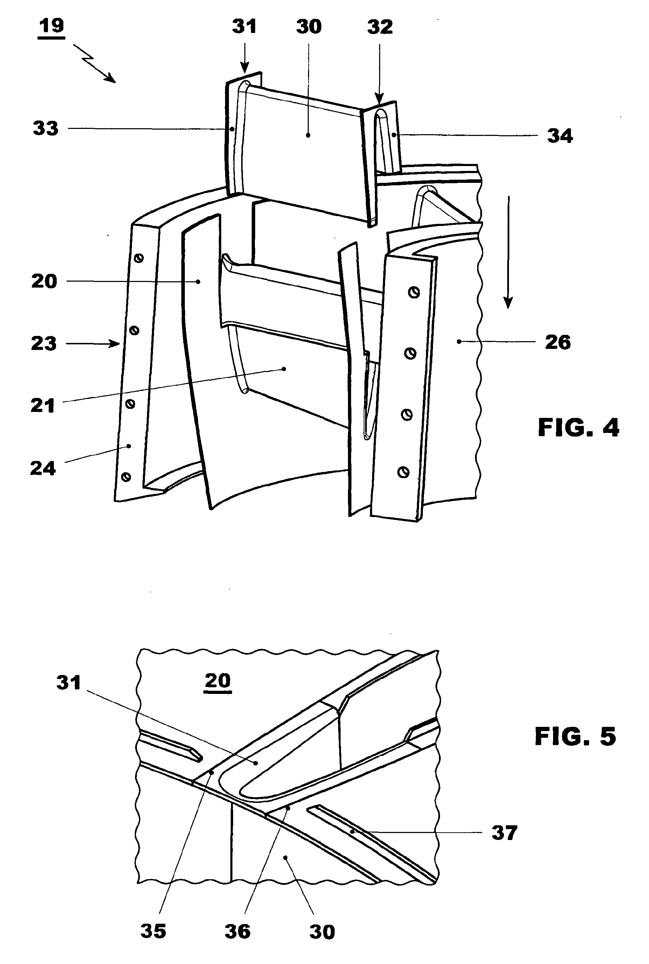

Durch die vorhandenen Streben 25 der Tragstruktur 23, die der Verbindung eines Innenrings 26 und eines Außenrings 24 dienen, lässt sich der Strömungsliner 19 nicht vollständig außerhalb der Tragstruktur 23 fertigen und dann montieren. Es kann nur der in Figur 2 und 3 gezeigte Teil des Strömungsliners 19 vorgefertigt werden, der an den Stellen, mit denen er über die Streben 25 der Tragstruktur 23 geschoben werden muss, entsprechende Aussparungen 27 aufweist. Dieser vorgefertigte Teil wird dann gemäß Figur 3 in Strömungsrichtung in die Tragstruktur 23 eingeschoben (Pfeil) und schließlich gemäß Figur 4 in den Bereichen der Aussparungen 27 durch rückwärtiges Einschieben und Anschweissen von entsprechend ausgelegten Hinterteilen 30 komplettiert. Die Hinterteile 30 sind an ihren radialen Enden mit passenden Flanschen 31, 32 ausgerüstet, an deren Rändern 33, 34 die Schweißnähte entlang geführt werden.

Durch diese Schweissungen am Strömungsliner 19 entstehen pro Rippe mindestens zwei axiale Schweißnähte (35, 26 in Figur 5), und zwar je am Aussenliner 20 und am Innenliner 22. Wenn auf der der Strömung abgewandten Seite der Liner 20, 22 ringförmige Verstärkungsrippen (37 in Figur 5) vorgesehen sind, haben auch die Verstärkungsrippen 37 je zwei radiale Schweißnähte. Bei allen diesen Schweißnähten ist die verlangte Qualität sehr schwierig zu erreichen, weil deren Orte innerhalb der Tragstruktur 23 nur schwer zugänglich sind.

Im Betrieb unterliegt der Strömungsliner 19 durch die hohen Temperaturen und die Strömungsgeschwindigkeit der Abgase der Gasturbine starken Vibrationen sowie starken thermischen Beanspruchungen. Zudem hat der Strömungsliner 19 unterschiedliche Steifigkeiten zwischen Innenliner 22 und Aussenliner 20 und auch am Umfang, im Bereich der Rippen 21 und dazwischen. Durch diese Belastungen entstehen Risse, deren Ausgangspunkt - bedingt durch Kerbfaktoren und die Schwächung durch das Schweißen - meistens die Schweißnähte am Austritt des Strömungsliners 19 sind (siehe Figur 5).

Aus der US 2005/0022501 ist ein integriertes Gehäuse für einen Verdichterfan, einen Mittelteil und einen Gaserzeugerteil eines Flugtriebwerks bekannt.

Aus der WO03/020469 ist ein Verfahren zur Herstellung eines Statorteils oder Rotorteils für eine Gasturbine bekannt, in dem eine Strebe oder ein Wandelement mit wenigstens einem Ringelement verbunden wird.

### DARSTELLUNG DER ERFINDUNG

Es ist daher Aufgabe der Erfindung, ein Abgasgehäuse für eine Gasturbine anzugeben, welches die Nachteile bisheriger Lösungen vermeidet und sich insbesondere dadurch auszeichnet, dass die bekannten Montageprozesse weit gehend beibehalten werden können, sowie ein Verfahren zu dessen Herstellung vorzuschlagen.

Die Aufgabe wird durch die Gesamtheit der Merkmale der Ansprüche 1 und 5 gelöst. Wesentlich für die Erfindung ist, dass zur Verstärkung den Hinterkanten der Liner umlaufende Endringe angeschweisst sind, welche die Schweißnähte am Linerrand abdecken.

Eine Ausgestaltung der Erfindung ist dadurch gekennzeichnet, dass die Endringe jeweils aus zwei Halbringen zusammengesetzt sind. Hierdurch wird die Montage erleichtert.

Eine andere Ausgestaltung der Erfindung zeichnet sich dadurch aus, dass auf den dem Ringkanal abgewandten Seiten des Aussenliners und des Innenliners ringförmig umlaufende, in radialer Richtung abstehende Verstärkungsrippen angeordnet sind.

Vorzugsweise sind die Verstärkungsrippen integraler Bestandteil der Endringe. Dies hat den Vorteil, dass entsprechende Schweißnähte am Strömungsliner entfallen können.

Bei dem erfindungsgemäßen Verfahren zum Herstellen des Abgasgehäuses wird in einem ersten Schritt die Tragstruktur bereitgestellt, in einem zweiten Schritt der Strömungsliner mit entsprechenden Ausnehmungen vorgefertigt, welche Ausnehmungen ein axiales Einschieben des Strömungsliners in die Tragstruktur ermöglichen, in einem dritten Schritt der vorgefertigte Strömungsliner in die Tragstruktur eingeschoben, und in einem vierten Schritt der Strömungsliner durch Anschweissen der Hinterteile vervollständigt, wobei in einem fünften Schritt an den Hinterkanten des Aussenliners und des Innenliners umlaufende Endringe angeschweisst werden.

Eine Ausgestaltung des erfindungsgemäßen Verfahrens ist dadurch gekennzeichnet, dass die Endringe aus Halbringen zusammengesetzt werden.

Gemäß einer anderen Ausgestaltung werden Endringe eingesetzt, welche auf den der Strömung abgewandten Seite integrierte Verstärkungsrippen aufweisen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer teilweise geschnittenen perspektivischen Darstellung eine beispielhafte Gasturbine mit einem ausgangsseitigen Abgasgehäuse;
- Fig. 2: die eine Hälfte eines Strömungsliners, der in die Tragstruktur des Abgasgehäuses eingeschoben wird, um für das Abgas einen ringförmigen Strömungskanal zu bilden;
- Fig. 3: das Einschieben des Strömungsliners aus Figur 2 in die Tragstruktur;
- Fig. 4: das Vervollständigen des Strömungsliners durch das Einsetzen und Anschweissen entsprechender Hinterteile;
- Fig. 5: die Lage der kritischen Schweißnähte zwischen Hinterteil und Liner;
- Fig. 6: einen Ausschnitt des fertig verschweißten Strömungsliners mit an den Hinterkanten angebrachten Endringen gemäß einem Ausführungsbeispiel der Erfindung;
- Fig. 7: den Querschnitt durch einen angeschweissten Endring; und
- Fig. 8: den Querschnitt durch einen angeschweissten Endring mit integrierter Verstärkungsrippe,
- Fig. 9: den Querschnitt durch einen angeschweissten Endring mit konischer Form.

### WEGE ZUR AUSFÜHRUNG DER ERFINDUNG

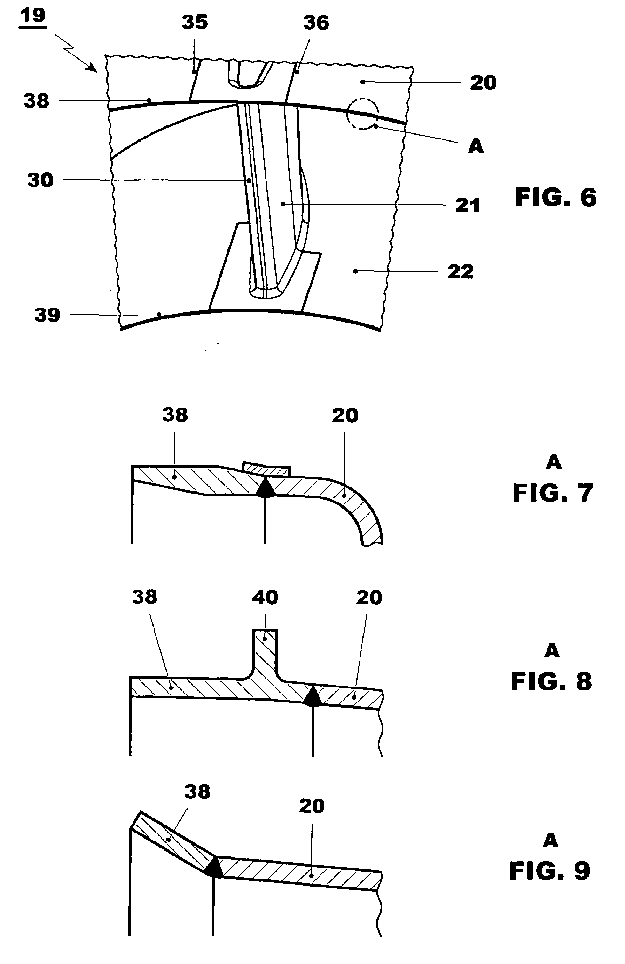

Um die Liner an den stromabwärts gelegenen Enden der in Figur 6 gezeigten axialen Schweißnähte 35, 36 zu verstärken, werden an den Hinterkanten des Innenliners 22 und des Aussenliners 20 nach dem Komplettieren des Strömungsliners (Figur 4) gemäß Figur 7, Figur 8 oder Figur 9 durchgehende Endringe 38 beziehungsweise 39 angeschweißt. Hierdurch ergeben sich eine Verstärkung und ein Schutz in den Endbereichen der Schweißnähte 35, 36 vor erhöhter Rissbildung, weil axial auslaufende Schweißnähte nicht mehr vorhanden sind.

Werden gemäß Figur 8 Endringe 38 verwendet, die integrierte Verstärkungsrippen 40 aufweisen, gibt es auch keine kritischen radialen Schweißnähte mehr an den Verstärkungsrippen.

Es ist aber auch denkbar, wie in Figur 7 angedeutet die Endringe 38 ohne Verstärkungsrippen auszuführen, dafür jedoch mit speziellen Querschnittsformen auszustatten, also zum Beispiel mit einer gegenüber dem Liner vergrößerten Dicke auszuführen, so dass die Endring 38 selbst als Verstärkung wirkt.

Falls der Endring 38 mit integrierter Verstärkungsrippe 40 ausgeführt wird, kann die radiale Höhe der Verstärkungsrippe 40 über den Umfang variiert werden, um die durch die Linerrippen verursachte Ungleichheit der Steifigkeit auszugleichen.

Bei Verwendung von Endringen 38 gemäss Figur 9, die in konischer Form von dem Strömungspfad weg aufgeweitet oder eingeschnürt sind, kann auf eine Verstärkungsrippe ebenfalls verzichtet werden. Das Beispiel in Figur 9 zeigt einen konisch in Strömungsrichtung aufgeweiteten Ring, wie er typischerweise für die Wand, die den Heissgaskanal nach aussen begrenzt verwendet wird. Für einen Ring, der Teil der Wand ist, die den Heissgaskanal zum Rotor bzw. Lager begrenzt, ist ein entsprechender Ring mit einer konischen Einschnürung vorgesehen.

Insgesamt ergeben sich mit der Erfindung die folgenden Vorteile:
- es gibt keine axial auslaufende Schweißnähte mehr;
- es werden Rissanfänge am Linerende vermieden;
- es wird eine höhere Betriebszuverlässigkeit erreicht;
- die Enden des Aussenliners und des Innenliners werden im Durchmesser genauer, weil die entsprechenden Ringe bearbeitet sind;
- es gibt keine umlaufenden Versätze mehr infolge von Blecheinschweissungen; und
- die Spalte zwischen dem Strömungsliner und benachbarten Strukturen sind geringer.

Die dargestellten bevorzugten Ausführungsformen der Erfindung dienen lediglich zur Erläuterung und sind nicht einschränkend auszulegen sind. Beispielsweise ist die Erfindung auch für Gasturbinen mit zwei oder mehr Brennkammern und/ oder Turbinen anwendbar.

### BEZUGSZEICHENLISTE

- 10: Gasturbine
- 11: Verdichter
- 12: Brenner
- 13: Brennkammer
- 14: Turbine
- 15: Aussengehäuse
- 16: Abgasgehäuse
- 17: Rotorwelle
- 18: Achse
- 19: Strömungsliner
- 20: Aussenliner
- 21: Linerrippe
- 22: Innenliner
- 23: Tragstruktur
- 24: Außenring
- 25: Strebe
- 26: Innenring
- 27: Aussparung
- 28,29: Kante
- 30: Hinterteil
- 31,32: Flansch
- 33,34: Rand (Flansch)
- 35,36: Schweissnaht (axial)
- 37,40: Verstärkungsrippe
- 38,39: Endring

## Patentansprüche

1. Abgasgehäuse (16) für eine Gasturbine (10), umfassend eine Tragstruktur (23), welche in konzentrischer Anordnung einen Außenring (24) und einen Innenring (26) umfasst, die durch eine Mehrzahl von radial angeordneten Streben (25) miteinander verbunden sind, sowie einen Strömungsliner (19), der innerhalb der Tragstruktur (23) angebracht ist und in konzentrischer Anordnung einen Aussenliner (20) und einen Innenliner (22) umfasst, die durch eine Mehrzahl von radial angeordneten Linerrippen (21) miteinander verbunden sind, wobei die Linerrippen (21) jeweils die Streben (25) der Tragstruktur (23) umschließen und der Aussenliner (20) und der Innenliner (22) innerhalb der Tragstruktur (23) einen Ringkanal für die heißen Abgase der Gasturbine (10) während des Betriebs bilden, und wobei die Linerrippen (21) jeweils unter Ausbildung von axial im Aussenliner (20) und im Innenliner (22) bis zum Linerrand verlaufenden Schweißnähten (35, 36) aus einem in Strömungsrichtung vorderen Teil und einem Hinterteil (30) zusammengeschweißt sind, **dadurch gekennzeichnet, dass** zur Verstärkung an den Hinterkanten der Liner (20, 22) umlaufende Endringe (38, 39) angeschweisst sind, welche die Schweißnähte (35, 36) am Linerrand abdecken.

2. Abgasgehäuse nach Anspruch 1, **dadurch gekennzeichnet, dass** die Endringe (38, 39) jeweils aus zwei Halbringen zusammengesetzt sind.

3. Abgasgehäuse nach Anspruch 1 oder 2, **dadurch gekennzeichnet, dass** auf den dem Ringkanal abgewandten Seiten des Aussenliners (20) und des Innenliners (22) ringförmig umlaufende, in radialer Richtung abstehende Verstärkungsrippen (37, 40) angeordnet sind.

4. Abgasgehäuse nach Anspruch 3, **dadurch gekennzeichnet, dass** die Verstärkungsrippen (40) integraler Bestandteil der Endringe (38, 39) sind.

5. Abgasgehäuse nach einem der Ansprüche 3 oder 4, **dadurch gekennzeichnet, dass** die Höhe der Verstärkungsrippen (40) über den Umfang variiert wird.

6. Abgasgehäuse nach einem der Ansprüche 1 bis 5, **dadurch gekennzeichnet, dass** die Dicke des Endringes grösser als die Dicke des Liners ist.

7. Abgasgehäuse nach einem der Ansprüche 1 bis 6, **dadurch gekennzeichnet, dass** die Dicke des Endringes über den Umfang variiert wird.

8. Abgasgehäuse nach einem der Ansprüche 1 bis 7, **dadurch gekennzeichnet, dass** das der Endring konisch aufgeweitet oder eingeschnürt ist.

9. Verfahren zum Herstellen eines Abgasgehäuses (16) nach einem der Ansprüche 1-8, bei welchem Verfahren in einem ersten Schritt die Tragstruktur (23) bereitgestellt wird, in einem zweiten Schritt der Strömungsliner (19) mit entsprechenden Aussparungen (27) vorgefertigt wird, welche Ausnehmungen (27) ein axiales Einschieben des Strömungsliners (19) in die Tragstruktur (23) ermöglichen, in einem dritten Schritt der vorgefertigte Strömungsliner (19) in die Tragstruktur (23) eingeschoben wird, und in einem vierten Schritt der Strömungsliner (19) durch Anschweissen der Hinterteile (30) vervollständigt wird, **dadurch gekennzeichnet, dass** in einem fünften Schritt an den Hinterkanten des Aussenliners (20) und des Innenliners (22) umlaufende Endringe (38, 39) angeschweisst werden.

10. Verfahren nach Anspruch 9, **dadurch gekennzeichnet, dass** die Endringe (38, 39) aus Halbringen zusammengesetzt werden.

11. Verfahren nach Anspruch 9 oder 10, **dadurch gekennzeichnet, dass** Endringe (38, 39) eingesetzt werden, welche auf den Außenseiten integrierte Verstärkungsrippen (40) aufweisen.

## Claims

1. An exhaust gas housing (16) for a gas turbine (10), comprising a support structure (23), which, in a concentric arrangement, comprises an outer ring (24) and an inner ring (26) which are interconnected by means of a multiplicity of radially arranged struts (25), and also a flow liner (19), which is attached inside the support structure (23) and, in a concentric arrangement, comprises an outer liner (20) and an inner liner (22) which are interconnected by means of a multiplicity of radially arranged liner ribs (21), wherein the liner ribs (21) encompass in each case the struts (25) of the support structure (23), and the outer liner (20) and the inner liner (22) inside the support structure (23) form an annular passage for the hot exhaust gases of the gas turbine (10) during operation, and wherein the liner ribs (21) are welded together in each case from a front part and rear part (30) in the flow direction, forming welded seams (35, 36) which extend axially in the outer liner (20) and in the inner liner (22) up to the liner edge, **characterized in that** encompassing end rings (38, 39), which cover the welded seams (35, 36) at the liner edge, are welded on the rear edges of the liner (20, 22) for reinforcement.

2. The exhaust gas housing as claimed in claim 1, **characterized in that** the end rings (38, 39) consist of two half-rings in each case.

3. The exhaust gas housing as claimed in claim 1 or 2, **characterized in that** annularly encompassing, radially projecting reinforcing ribs (37, 40) are arranged on the sides of the outer liner (20) and of the inner liner (22) facing away from the annular passage.

4. The exhaust gas housing as claimed in claim 3, **characterized in that** the reinforcing ribs (40) are integral component parts of the end rings (38, 39).

5. The exhaust gas housing as claimed in either claim 3 or 4, **characterized in that** the height of the reinforcing ribs (40) is varied over the circumference.

6. The exhaust gas housing as claimed in one of claims 1 to 5, **characterized in that** the thickness of the end ring is greater than the thickness of the liner.

7. The exhaust gas housing as claimed in one of claims 1 to 6, **characterized in that** the thickness of the end ring is varied over the circumference.

8. The exhaust gas housing as claimed in one of claims 1 to 7, **characterized in that** the end ring is conically widened or constricted.

9. A method for producing an exhaust gas housing (16) as claimed in one of claims 1 to 8, in which in a first step the support structure (23) is provided, in a second step the flow liner (19) with corresponding recesses (27) is prefabricated, which recesses (27) enable axial insertion of the flow liner (19) into the support structure (23), in a third step the prefabricated flow liner (19) is inserted into the support structure (23), and in a fourth step the flow liner (19) is completed by welding-on of the rear parts (30), **characterized in that** in a fifth step encompassing end rings (38, 39) are welded on the rear edges of the outer liner (20) and of the inner liner (22).

10. The method as claimed in claim 9, **characterized in that** the end rings (38, 39) consist of half-rings.

11. The method as claimed in claim 9 or 10, **characterized in that** end rings (38, 39) which on the outer sides facing away from the flow have integrated reinforcing ribs (40), are used.

## Revendications

1. Collecteur de gaz d'échappement (16) pour une turbine à gaz (10), comprenant une structure portante (23), qui comprend, dans un agencement concentrique, une bague extérieure (24) et une bague intérieure (26) qui sont connectées l'une à l'autre par une pluralité de montants (25) disposés radialement, ainsi qu'une chemise d'écoulement (19) qui est installée à l'intérieur de la structure portante (23) et qui comprend, dans un agencement concentrique, une chemise extérieure (20) et une chemise intérieure (22), qui sont connectées l'une à l'autre par une pluralité de nervures de chemise (21) disposées radialement, les nervures de chemise (21) entourant à chaque fois les montants (25) de la structure portante (23) et la chemise extérieure (20) et la chemise intérieure (22) formant à l'intérieur de la structure portante (23) un canal annulaire pour les gaz d'échappement chauds de la turbine à gaz (10) pendant le fonctionnement, et les nervures de chemise (21) étant soudées ensemble, à chaque fois en formant des cordons de soudure (35, 36) s'étendant axialement dans la chemise extérieure (20) et dans la chemise intérieure (22) jusqu'au bord des chemises, à partir d'une partie avant et d'une partie arrière (30), dans la direction d'écoulement, **caractérisé en ce que** pour le renforcement, des bagues d'extrémité périphériques (38, 39) sont soudées aux arêtes arrière des chemises (20, 22) et recouvrent les cordons de soudure (35, 36) au niveau du bord des chemises.

2. Collecteur de gaz d'échappement selon la revendication 1, **caractérisé en ce que** les bagues d'extrémité (38, 39) sont constituées chacune de deux demi-bagues.

3. Collecteur de gaz d'échappement selon la revendication 1 ou 2, **caractérisé en ce que** sur les côtés opposés au canal annulaire de la chemise extérieure (20) et de la chemise intérieure (22) sont disposées des nervures de renforcement (37, 40) périphériques annulaires, saillant dans la direction radiale.

4. Collecteur de gaz d'échappement selon la revendication 3, **caractérisé en ce que** les nervures de renforcement (40) font partie intégrante des bagues d'extrémité (38, 39).

5. Collecteur de gaz d'échappement selon l'une quelconque des revendications 3 à 4, **caractérisé en ce que** la hauteur des nervures de renforcement (40) varie sur la périphérie.

6. Collecteur de gaz d'échappement selon l'une quelconque des revendications 1 à 5, **caractérisé en ce que** l'épaisseur de la bague d'extrémité est supérieure à l'épaisseur de la chemise.

7. Collecteur de gaz d'échappement selon l'une quelconque des revendications 1 à 6, **caractérisé en ce que** l'épaisseur de la bague d'extrémité varie sur la périphérie.

8. Collecteur de gaz d'échappement selon l'une quelconque des revendications 1 à 7, **caractérisé en ce que** la bague d'extrémité est élargie ou rétrécie coniquement.

9. Procédé de fabrication d'un collecteur de gaz d'échappement (16) selon l'une quelconque des revendications 1 à 8, dans lequel procédé, dans une première étape, la structure portante (23) est fournie, dans une deuxième étape, la chemise d'écoulement (19) est préfabriquée avec des évidements correspondants (27), lesquels évidements (27) permettent un enfoncement axial de la chemise d'écoulement (19) dans la structure portante (23), dans une troisième étape la chemise d'écoulement préfabriquée (19) est enfoncée dans la structure portante (23), et dans une quatrième étape, la chemise d'écoulement (19) est achevée par soudage des parties arrière (30), **caractérisé en ce que** dans une cinquième étape, des bagues d'extrémité périphériques (38, 39) sont soudées aux arêtes arrière de la chemise extérieure (20) et de la chemise intérieure (22).

10. Procédé selon la revendication 9, **caractérisé en ce que** les bagues d'extrémité (38, 39) sont assemblées sous forme de demi-bagues.

11. Procédé selon la revendication 9 ou 10, **caractérisé en ce que** des bagues d'extrémité (38, 39) sont utilisées, lesquelles présentent sur les côtés extérieurs des nervures de renforcement (40) intégrées.
